# EUROPEAN PATENT APPLICATION

(11) **EP 2 066 085 A1**
(43) Date of publication of application: **03.06.2009**
(21) Application number: 07076030.1
(22) Date of filing: 29.11.2007
(51) Int. Cl.: H04L 12/56

(54) **Bluetooth stack processor with QOS**

(71) Applicant: STMicroelectronics Belgium N.V., 1930 Zaventem (BE)
(72) Inventor: Jacops, Davy, 2550 Kontich (BE); Van Parijs, Jorgen, 1850 Grimbergen (BE)
(74) Representative: Bird, William Edward

(57) **Abstract**

A baseband processor (20) for a Bluetooth device (80) processes packets according to a protocol stack, and uses a Bluetooth host controller interface (30) to receive packets having given priorities, from a higher protocol level or levels. Packet buffers (B1-Bn) are used to buffer the received packets, and the processor reorders the buffered packets according to their priorities, to output a prioritized stream of packets suitable for transmission by a radio part. By prioritising after the HCI interface, rather than before it, the QOS queues can be effectively located at a lower level in the stack. This means the decision made about the order of transmission of the packets, can take place later, meaning a higher probability that a high priority packet can "pass" queues of lower priority packets, and reach the air interface sooner. The reordering can involve a multiplexer (200) arranged to multiplex packets from multiplee packet buffers according to their priorities.

## Description

**Field of the invention:** This invention relates to baseband processors for processing packets according to protocol stacks, especially telecommunication protocol stacks, to devices having such processors, to methods of processing packets, and to corresponding software and integrated circuits.

### Description of the Related Art:

Bluetooth is a well known wireless protocol that describes how mobile phones, computers, peripherals and other devices can interconnect using a short-range wireless connection. The specification of the Bluetooth System, v1.0 B, Dec. 1, 1999, and later versions, such as v1.2 and v2.0, are publicly available, and the reader is referred to these documents for more details. Bluetooth is a packet based frequency hopping protocol. A receiver typically has signal processing functions for waveform demodulation, DC compensation, bit synchronization and bit detection.

Typically a Bluetooth device has a radio part for receiving and sending packets, coupled to a processor or processors for implementing a "stack" of protocols. The stack can be divided into a baseband protocol part, and a host part having higher level protocol processing. These parts are coupled by a host controller interface (HCI). The baseband protocol part is usually embedded in hardware in a device, while the host part includes user definable or manufacturer definable functions to suit the application.

### Summary of the Invention:

An object of the invention is to provide improved baseband processors for processing packets according to protocol stacks, especially telecommunication protocol stacks, devices having such processors, methods of processing packets, and corresponding software and integrated circuits.

According to a first aspect, the invention provides:
A baseband processor for processing packets according to a protocol stack, the processor being arranged to implement a HCI (Host Controller Interface), e.g. for Bluetooth, to receive packets having given priorities, from a higher protocol level or levels, the processor having packet buffers arranged to buffer the received packets, and being arranged to schedule, e.g. order or reorder the buffered packets according to their priorities, and output a prioritized stream of packets suitable for transmission by a Bluetooth type transmitter.

The present invention also provides a baseband processor for processing packets according to a protocol stack, the processor being arranged to implement a host controller interface, e.g. for Bluetooth, to receive packets having given priorities, from a higher protocol level or levels, the processor having packet buffers (B1-Bn) arranged to buffer the received packets, and the processor being arranged to schedule, e.g. order or reorder the buffered packets according to their priorities, and output a prioritized stream of packets suitable for transmission by a radio part.

By providing the prioritising after the HCI interface, rather than before it, the QOS queues can be effectively located at a lower level in the stack. This means the decision made about the order of transmission of the packets, can take place later. In turn this means a higher probability that a high priority packet can "pass" queues of lower priority packets. Even if the queues are full of low priority packets, a high priority packet can be multiplexed immediately and reach the air interface sooner.

Other aspects of the invention provide a corresponding method of processing packets, corresponding computer programs for carrying out the methods, or integrated circuits having such programs.

Any additional features can be added, and some additional features are described below. Any of the additional features can be combined together and combined with any of the aspects. Other advantages will be apparent to those skilled in the art, especially over other prior art. Numerous variations and modifications can be made without departing from the claims of the present invention. Therefore, it should be clearly understood that the form of the present invention is illustrative only and is not intended to limit the scope of the present invention.

### Brief Description of the Drawings:

How the present invention may be put into effect will now be described by way of example with reference to the appended drawings, in which:
Fig 1 shows a Bluetooth device,
Fig 2 shows a schematic view of parts of a reference device, and
Figs 3 to 5 show schematic views of a device having a processor according to embodiments of the invention.

### Description of the Preferred Embodiments:

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

The term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

In the following reference will be made to Bluetooth and its standards and its use in a communication system. The features of such a system may include one or more of:
Slow frequency hopping as spread spectrum technique (With regard to frequency hopping, "slow frequency hopping" refers to the hopping frequency being slower than the modulation rate, "fast frequency hopping" referring to a hopping rate faster than the modulation rate. The present invention is not limited to either slow or fast hopping) Master and slave units whereby the master unit can set the hopping sequence Each device has its own clock and its own address

The hopping sequence of a master unit can be determined from its address A set of slave units communicating with one master all have the same hopping frequency (of the master) and form a piconet

Piconets can be linked through common slave units to form a scatternet Time division multiplex transmissions between slave and master units Time Division Duplex transmissions between slaves and masters units

Transmissions between slave and master units may be either synchronous or asynchronous

Master units determine when slave units can transmit Slave units may only reply when addressed by a master unit The clocks are free-running

Uncoordinated networks, especially those operating in the 2.4 GHz license-free ISM band.

A software stack to enable applications to find other Bluetooth devices in the area Other devices are found by a discovery procedure

Hard or soft handovers.

Instead of Bluetooth, other radio communication standards may be used, e.g. "Home RF" may also be used. The communications may also be achieved using an access technology to a wireless LAN, e.g. in accordance with IEEE 802.11. The communications system may be a Personal Access Network (PAN).

By way of introduction to a first embodiment of the invention, some problems with Bluetooth QOS will be discussed briefly.
- Current Bluetooth standards (such as "2.0 + EDR") do not offer sufficient QOS for some applications. In other words, where low priority packets or low priority streams of packets coincide with higher priority packets, the standards do not enable sufficient differentiation, and thus do not allow sufficient prioritization. So the higher priority packets can be delayed if there are many lower priority packets. An example is stereo audio applications using stereo streaming (in which high priority and low latency required to avoid "clicks" in the music which can be caused by too late arrival or missing packets) when combined with low priority data (e.g. FTP or OPP low priority since less time critical).
- Future Bluetooth standards may offer sufficient QOS for such applications, but only through heavy and costly changes in both software and hardware. Thus they may be incompatible with existing devices, and there will be delays in implementing such standards until they are fully agreed.

Embodiments of the invention involve a packet processor arranged to implement a HCI interface e.g. for a Bluetooth protocol, to receive and buffer packets, then order or reorder them according to their priorities. In some embodiments this can involve receiving two or more streams of packets having given priorities, from a higher protocol level or levels, the processor having packet buffers arranged to buffer the received streams, and having a multiplexer arranged to multiplex packets from the packet buffers according to their priorities.

The HCI provides a uniform command method of accessing the Bluetooth hardware capabilities. The HCI Link commands provide the Host with the ability to control the link layer connections to other Bluetooth devices.

The Logical Link Control and Adaptation Layer Protocol (L2CAP) is a layer above the Baseband Protocol and resides in the data link layer. L2CAP provides connection-oriented and connectionless data services to higher layer protocols. Notably it can provide protocol multiplexing capability, and other functions such as segmentation and reassembly operations, and group abstractions for example. Two link types are supported for the Baseband layer : Synchronous Connection-Oriented (SCO) links and

Asynchronous Connection-Less (ACL) links. SCO links support real-time voice traffic using reserved bandwidth. ACL links support best effort traffic. The L2CAP Specification is defined for only ACL links. The ACL link is a point-to-multipoint link between the master and all the slaves participating on a current Bluetooth piconet.

The L2CAP layer uses the HCI to communicate with the baseband part. The baseband part is concerned with physical channels and links and is typically implemented to have a Link Manager and Link Controller (LM/LC). The link controller works with the link manager to carry out link level routines like link connection and power control. The baseband part also manages asynchronous and synchronous links, handles packets and does paging and inquiry to access and inquire of other Bluetooth devices in range.

The Link Manager can carry out link setup, authentication, link configuration and other functions. It can discover other LM's on remote devices and communicate with them via the Link Manager Protocol (LMP). To perform its service provider role, the LM uses the underlying Link Controller (LC). The Link Manager Protocol involves sending any of a number of PDU (protocol Data Units), from one device to another, addressed by the packet header.

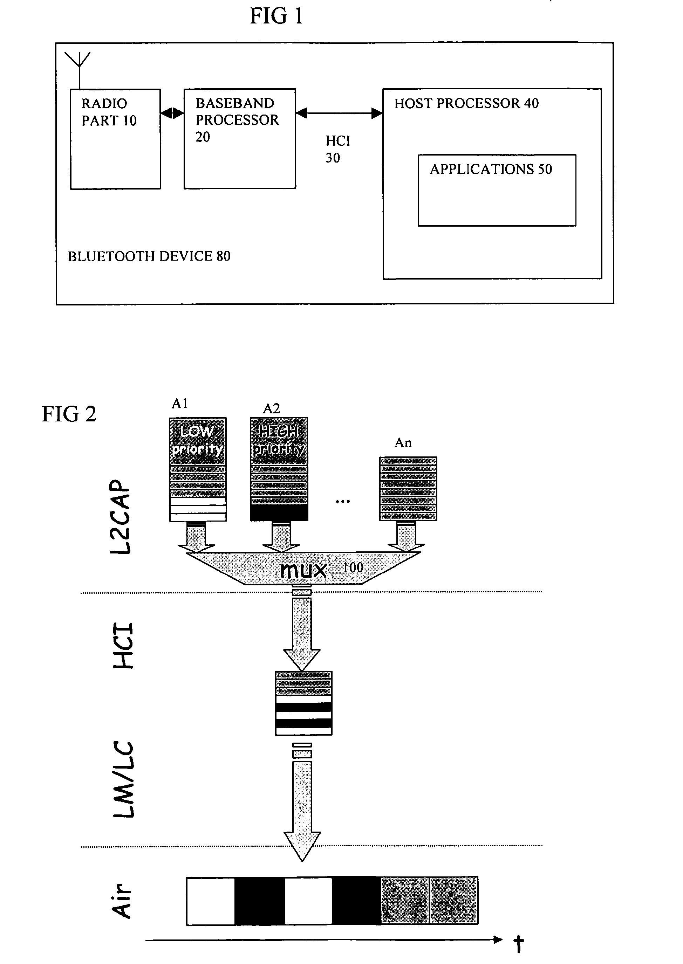

Fig 1 shows an overview of a Bluetooth device 80 in schematic form. A radio part 10, is coupled to a baseband processor part 20, which is in turn coupled to a host processor part 40 part by an HCI 30. The host processor part has a number of applications 50 each providing packets to the HCI for transmission by the radio part to other Bluetooth devices, to be passed by their radio parts through their baseband part to a destination application in their host part.

Figure 2 shows for reference a scheme involving multiplexing above the HCI. A number of packet buffers A1-An are shown, a first on the left side having low priority packets, and a second having higher priority packets. A multiplexer 100 selects packets from the buffers and multiplexes them then passes them through the HCI to the LM/LC, which in turn feeds them to the radio part where they are transmitted over the air. The resulting order of the packets is shown by the timing chart at the bottom of the figure, the first being at the left side. The higher priority packets are shaded, to show they are delayed somewhat by the lower priority packets, if selected in turn by the multiplexer without regard for their priority.

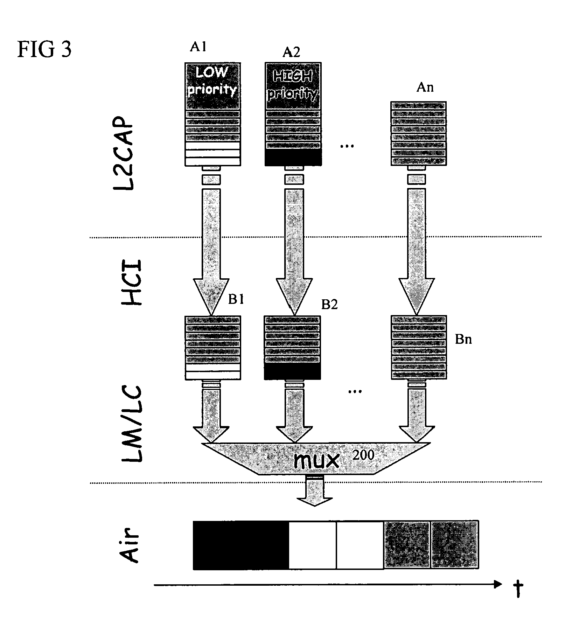

Fig 3 shows an embodiment of the invention. Similar reference numerals have been used to those of fig 2 where applicable. Fig. 3 shows an embodiment involving multiplexing after the HCI. A number of packet buffers A1-An are shown, a first on the left side having low priority packets, and a second having higher priority packets. These streams are handled in parallel by the HCI. A multiplexer 200 is now located after the HCI. It can be part of the LM/LC, or a separate function after the HCI. Buffers B1-Bn are shown at the inputs to the multiplexer. These can be in addition to or instead of the buffers before the HCI. Again the multiplexer decides the order of packets transmitted. In this case, as shown at the bottom of fig 3, the shaded higher priority cases at the left end of the timing chart are transmitted first. A third queue is shown empty, though it could also have packets. In Fig 3, the baseband processor would implement the functions in the area labeled "HCI" and "LM/LC". The host processor would implement the functions in the part labeled "L2CAP", and would implement its half of the HCI. The radio part would implement the part of fig 3 labeled "air".

In the reference arrangement, only 1 ACL connection handle is available at the HCI level. In some embodiments of the invention, each ACL connection handle may have several QOS handles. This is to distinguish the different priorities. The lower layers should be made aware of this. This means there can be an impact at the HCI level. One way to enable and control the prioritization feature from the host is by agreeing proprietary HCI commands. Other ways can be envisaged. A connection handle is a 12 bit representation in a packet header, of a channel connection between two Bluetooth devices. There can be multiple connection handles between two Bluetooth devices, all referring to the same ACL channel. Since two communicating devices can have multiple applications running between them, the connection handle provides a way of distinguishing which application sent a given data packet, or which application is to receive it. Although shown using a multiplexer, the processor could be arranged with a single buffer such as a first in, random out memory arrangement and a means to reorder the packets by controlling the output memory addressing, for example. Other ways or reordering can be envisaged.

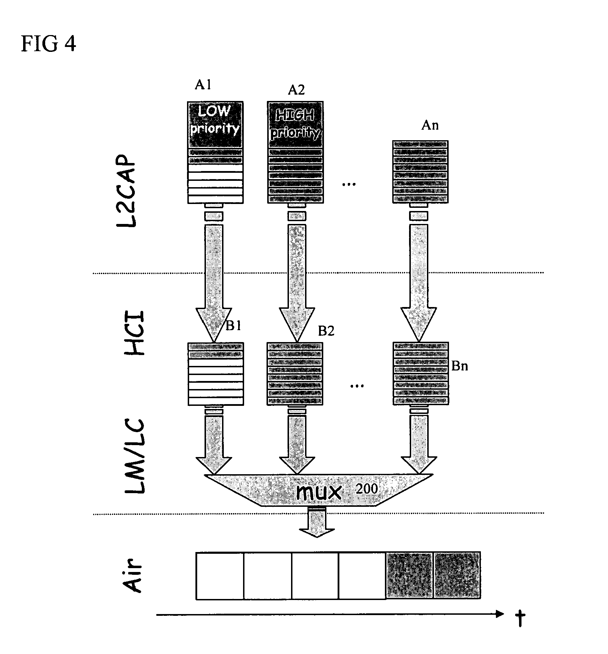

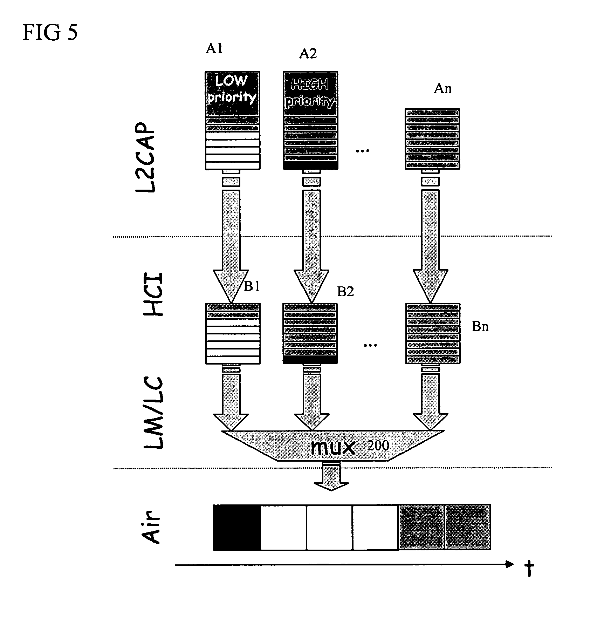

Fig 4 and 5 show schematic views similar to that of fig 3 and show examples of the prioritization feature in use. Features of these figures shown in Fig 3 have corresponding reference numerals. In fig 4, the low priority queue fills up first, before any packets appear in the high priority queue. In figure 5, a high priority packet subsequently appears. As shown, this is selected straight away by the multiplexer and appears first in the order of packets for transmission, shown at the bottom of the figure. As shown, there can be more than two queues. This prioritization feature is notable for enabling QOS to be introduced in Bluetooth baseband devices, such as those implementing Bluetooth v2.0 and v2.1. It can be achieved with relatively simple changes to embedded software only, (in some embodiments this involves a ROM mask change), without changing the air interface for example. Thus it can be compatible with existing Bluetooth devices. It therefore involves lower costs than implementing changes in standards for higher level protocols, and provides a phased way to migrate towards the QOS features expected to be defined in future standards. Furthermore there is no need for further qualification of devices by a qualification body, which is often time consuming.

By bringing the QOS queues to a lower level in the stack, the probability a high priority ACL packet can "pass" a low priority ACL packet is higher:
- The *decision time* is delayed
- Even if the queues are full of low priority packets, a high priority packet can take over immediately and reach the air interface much sooner.

An example application is for stereo audio, which can be prioritized over low priority data (e.g. ftp) if host application software uses this feature wisely; this means direct visibility for end customers, in other words, for the example given, good audio quality in terms of no glitches in sound can be achieved while using the same bluetooth device for other applications at the same time. This provides a differentiating feature for a common practical situation.

Notably such embodiments tend to increase the amount of RAM used, which can have an effect on the die size / cost for the baseband processor. Also, in some embodiments retransmissions of low priority ACL data packets will get priority above high priority ACL. This may be undesirable in some cases, but is not usually a critical issue. The multiplexer would not decide the priority because typically the retransmision mechanism is implemented in hardware, below this priority mechanism. So (in a transmission direction) the multiplexing takes place before the retransmissions are done over the air interface.

Notably in some embodiments proprietary HCI commands are used to start, control or configure the prioritization feature in the baseband processor, such as when a new application connection is set up, in which case the lower layers need to be informed of the priority. This implies that the host should be made aware that the baseband processor has the prioritisation feature. This means that manufacturers of devices responsible for the host software, such as mobile handset makers, may need to adapt the stack processing in the host software.

As has been described above, a baseband processor (20) for a Bluetooth device (80) processes packets according to a protocol stack, and uses a Bluetooth host controller interface (30) to receive packets having given priorities, from a higher protocol level or levels. Packet buffers (B1-Bn) are used to buffer the received packets, and the processor reorders the buffered packets according to their priorities, to output a prioritized stream of packets suitable for transmission by a radio part. By prioritising after the HCI interface, rather than before it, the QOS queues can be effectively located at a lower level in the stack. This means the decision made about the order of transmission of the packets, can take place later, meaning a higher probability that a high priority packet can "pass" queues of lower priority packets, and reach the air interface sooner. The reordering can involve a multiplexer (200) arranged to multiplex packets from multiplee packet buffers according to their priorities.

Additional features can involve receiving two or more streams of packets having given priorities, from the higher protocol level or levels, the processor having packet buffers arranged to buffer the received streams, and having a multiplexer arranged to multiplex packets from the packet buffers according to their priorities. Another such additional feature is the multiplexer being arranged to detect when a packet has arrived in one or more of the buffers predetermined to be for buffering high priority packets, and to multiplex and output that packet before packets from buffers for lower priority packets. Another such feature is the processor being arranged to determine a priority according to a source of the given packet. Another such feature is determining a priority from a parameter in a header of the given packet. Another such feature is the multiplexer being arranged to select packets from buffers having the same priority level according to a predetermined sequence. Another such feature is the processor having a Link manager and link controller, the multiplexer being implemented by the link manager or link controller. Another such feature is a device having the processor for baseband functions, and a processor for host functions, coupled to the baseband functions by the HCI.

The functions described can be implemented using any conventional processing hardware such as DSP circuitry running programs from ROM, ASICs, programmable gate arrays and so on. Software can be written in any conventional programming language. Integrated circuits for implementing the functions can use any conventional technology. The functions can be combined or divided in different ways to those described. The prioritization can be in terms of urgency, or importance or reliability of delivery, or other parameter. Other variations can be envisaged within the scope of the claims.

## Claims

1. A baseband processor (20) for processing packets according to a protocol stack, the processor being arranged to implement a host controller interface (30) to receive packets having given priorities, from a higher protocol level or levels, the processor having packet buffers (B1-Bn) arranged to buffer the received packets, and the processor being arranged to schedule the buffered packets according to their priorities, and output a prioritized stream of packets suitable for transmission by a radio part.

2. The baseband processor of claim 1 arranged to receive two or more streams of packets having given priorities, from the higher protocol level or levels, and having a multiplexer (200) arranged to multiplex packets from the packet buffers according to their priorities.

3. The baseband processor of claim 2, the multiplexer being arranged to detect when a packet has arrived in one or more of the buffers predetermined to be for buffering high priority packets, and to multiplex and output that packet before packets from buffers for lower priority packets.

4. The baseband processor of claim 2 or 3 and arranged to determine the priority according to a source of the given packet.

5. The baseband processor of claim 2 or 3, and arranged to determine the priority from a parameter in a header of the given packet.

6. The baseband processor of claim 2 or any claim depending on claim 2, the multiplexer being arranged to select packets having the same priority level, from different ones of the streams according to a predetermined sequence.

7. The baseband processor of any preceding claim, arranged to configure the reordering according to commands passed over the host communication interface.

8. The baseband processor of any preceding claim, having a link manager and link controller, the reordering being implemented by the link manager or link controller.

9. A Bluetooth device (80) having a radio part (10), the baseband processor (20) of any preceding claim, coupled to the radio part, and a processor (40) for host functions, coupled to the baseband processor by the HCI.

10. A method of processing packets according to a protocol stack, comprising: using a Host Controller Interface to receive packets having given priorities from a higher protocol level or levels, buffering the received packets, scheduling the buffered packets according to their priorities, and outputting a prioritized stream of packets to a radio part.

11. The method of claim 10, having the steps of receiving a number of streams of packets, the reordering step comprising multiplexing packets from the different streams.

12. A computer program arranged to carry out the method of claim 10 or 11.

13. An integrated circuit having the baseband processor of any of claims 1 to 9 or a stored program as set out in claim 10 or 11.
